# EUROPEAN PATENT APPLICATION

(11) **EP 4 800 933 A1**
(43) Date of publication of application: **02.09.2026**
(21) Application number: 24925946.6
(22) Date of filing: 21.02.2024
(51) Int. Cl.: H04B 7/02

(54) **SIGNAL PROCESSING DEVICE AND SIGNAL PROCESSING METHOD**

(71) Applicant: Mitsubishi Electric Corporation, Tokyo 100-8310 (JP)
(72) Inventor: AKAMATSU, Takatoshi, Tokyo 100-8310 (JP)
(74) Representative: Mewburn Ellis LLP
(86) International application number: PCT/JP2024/006141
(87) International publication number: WO 2025/177443

(57) **Abstract**

A signal processing device (300A, 300B, 300D) includes: a signal extraction unit (310A) to extract a first pulse signal from a reception signal of a first antenna (101) having received input of a radio wave and extract a second pulse signal from a reception signal of a second antenna (102) that is disposed at a distance from the first antenna (101) and has received input of the radio wave; and a signal combination unit (320A) to generate a first combined signal obtained by combining a plurality of the first pulse signals in a time axis direction and a second combined signal obtained by combining a plurality of the second pulse signals in the time axis direction.

## Description

### TECHNICAL FIELD

The present disclosure relates to a signal processing device and a signal processing method.

### BACKGROUND ART

Conventionally, there has been a device disclosed to estimate the incoming direction of an incoming radio wave on the basis of correlation information about the incoming radio wave using an array antenna (e.g. see Patent Literature 1). A device described in Patent Literature 1 converts the outputs from antenna elements in an array antenna having received an incoming radio wave into reception signals in a digital format at respective A/D converters and estimates the incoming direction of the incoming radio wave on the basis of the converted reception signals.

### CITATION LIST

### PATENT LITERATURES

Patent Literature 1: WO 2019/030857

### SUMMARY OF INVENTION

### TECHNICAL PROBLEM

However, in order to obtain sufficient estimation accuracy for the incoming direction of a radio wave, it is required that the pulse width of pulse signals, which are the outputs from the antenna elements, be sufficiently greater than the sampling period of the A/D converters. Because of this, the device described in Patent Literature 1 has a problem in that, for example, in a case where the pulse width of pulse signals is on the same order as the sampling interval of the A/D converters, it is difficult to achieve sufficient estimation accuracy for the incoming direction of a radio wave.

The present disclosure has been made to solve the problem, and an object thereof is to provide a signal processing device and a signal processing method that can improve the estimation accuracy for the incoming direction of a radio wave compared to conventional techniques.

### SOLUTION TO PROBLEM

A signal processing device according to the present disclosure includes: a signal extraction unit to extract a first pulse signal from a reception signal of a first antenna having received input of a radio wave and extract a second pulse signal from a reception signal of a second antenna that is disposed at a distance from the first antenna and has received input of the radio wave; and a signal combination unit to generate a first combined signal obtained by combining a plurality of first pulse signals in a time axis direction and a second combined signal obtained by combining a plurality of second pulse signals in the time axis direction.

### ADVANTAGEOUS EFFECTS OF INVENTION

The signal processing device according to the present disclosure extracts the first pulse signal and the second pulse signal from the first antenna and the second antenna, respectively, and generates the first combined signal obtained by combining the plurality of first pulse signals in the time axis direction and the second combined signal obtained by combining the plurality of second pulse signals in the time axis direction. Thereby, in a case where the incoming direction of the radio wave is estimated on the basis of the first combined signal and the second combined signal, the estimation accuracy of the incoming direction can be improved compared to a case where the incoming direction of the radio wave is estimated without generating the first combined signal and the second combined signal.

### BRIEF DESCRIPTION OF DRAWINGS

FIG. 1 is a block diagram illustrating the schematic configuration of a radio-wave-incoming-direction estimation system according to a first embodiment.
FIG. 2 is a block diagram illustrating an example of the hardware configuration of a first control unit and a second control unit according to the first embodiment.
FIG. 3 is a block diagram illustrating an example of the hardware configuration of the first control unit and the second control unit according to the first embodiment.
FIG. 4 is a flowchart illustrating an example of a process performed by the first control unit according to the first embodiment.
FIG. 5A is a schematic diagram illustrating a pulse signal that a signal extraction unit according to the first embodiment has extracted in one of information communication channels, and FIG. 5B is a schematic diagram illustrating a combined signal that a signal combination unit according to the first embodiment has generated on the basis of the pulse signal.
FIG. 6 is a schematic diagram illustrating a process performed by the radio-wave-incoming-direction estimation system according to the first embodiment when performing information compression and restoration by serial calculation using PAST.
FIG. 7 is a flowchart illustrating an example of a process performed by the second control unit according to the first embodiment.
FIG. 8 is a block diagram illustrating the schematic configuration of a radio-wave-incoming-direction estimation system according to a second embodiment.
FIG. 9 is a block diagram illustrating the schematic configuration of a radio-wave-incoming-direction estimation system according to a third embodiment.
FIG. 10 is a block diagram illustrating the schematic configuration of a radio-wave-incoming-direction estimation system according to a fourth embodiment.

### DESCRIPTION OF EMBODIMENTS

Hereinbelow, embodiments according to the present disclosure are explained in detail with reference to the drawings.

### First Embodiment.

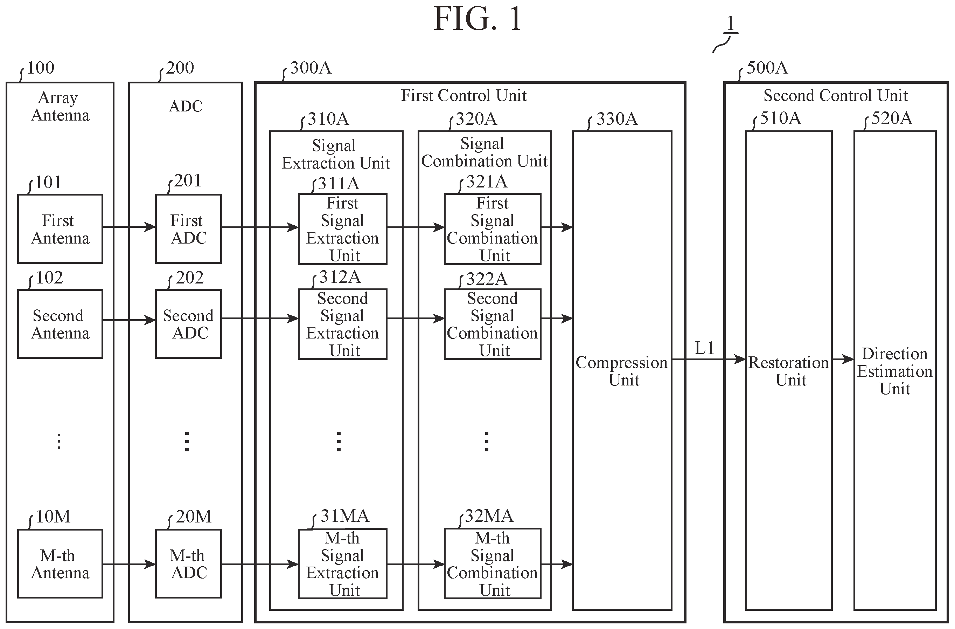

First, the schematic configuration of a radio-wave-incoming-direction estimation system 1 according to a first embodiment is explained with reference to FIG. 1. FIG. 1 is a block diagram illustrating the schematic configuration of the radio-wave-incoming-direction estimation system 1 according to the first embodiment. The radio-wave-incoming-direction estimation system 1 is a system for estimating the incoming direction of an input radio wave. As illustrated in FIG. 1, the radio-wave-incoming-direction estimation system 1 includes an array antenna 100, an analog-digital converter (Analog-to-Digital Converter; hereinafter, referred to as ADC) 200, a first control unit 300A, and a second control unit 500A which are connected to each other by signal lines in such a manner that information can be communicated between them.

The array antenna 100 converts an input radio wave into an analog signal. The array antenna 100 has M antenna elements including a first antenna 101, a second antenna 102, ···, and an M-th antenna 10M. In the first embodiment, M represents a preset integer equal to or greater than 3. The first antenna 101, the second antenna 102, ···, and the M-th antenna 10M are arranged at distances from each other. For example, the first antenna 101, the second antenna 102, ···, and the M-th antenna 10M are arranged at distances from each other on a straight line, a plane, or a curved surface. In addition, for example, the first antenna 101, the second antenna 102, ···, and the M-th antenna 10M are arranged at distances from each other in such a manner that the first antenna 101, the second antenna 102, ···, and the M-th antenna 10M are at equal intervals on a straight line. Note that antennas of various types of scheme such as dipole antennas, slot antennas, or microstrips can be adopted as antenna elements of the array antenna 100.

For each antenna element, the array antenna 100 converts an input radio wave into a reception signal which is an analog signal. For example, for each antenna element, the array antenna 100 performs an amplification process, a filtering process, a frequency conversion process, or the like on the input radio wave and converts the input radio wave into a reception signal for the antenna element. The array antenna 100 outputs, to the ADC 200, a reception signal of each antenna element obtained by the conversion of the radio wave.

The ADC 200 converts analog signals input from the array antenna 100 into digital signals. The ADC 200 has M ADCs respectively corresponding to the first antenna 101, the second antenna 102, ···, and the M-th antenna 10M and including a first ADC 201, a second ADC 202, ···, and an M-th ADC 20M. For each antenna element, the first ADC 201, the second ADC 202, ···, and the M-th ADC 20M convert reception signals which are analog signals input from the first antenna 101, the second antenna 102, ···, and the M-th antenna 10M, respectively, into reception signals which are digital signals. For example, each of the first ADC 201, the second ADC 202, ···, and the M-th ADC 20M converts a reception signal which is an analog signal into a reception signal which is a digital signal by sampling the reception signal which is an analog signal at a preset sampling frequency. The ADC 200 outputs, to the first control unit 300A, the respective reception signals which are digital signals obtained by the conversion of the reception signals which are analog signals.

The first control unit 300A as a signal processing device includes a signal extraction unit 310A, a signal combination unit 320A, and a compression unit 330A. From reception signals input from the ADC 200, the signal extraction unit 310A extracts pulse signals of a desired radio wave (hereinbelow, referred to as a desired wave) which has been input to the array antenna 100 and is the target of direction estimation. The signal extraction unit 310A has M signal extraction units respectively corresponding to the first ADC 201, the second ADC 202, ···, and the M-th ADC 20M and including a first signal extraction unit 311A, a second signal extraction unit 312A, ···, and an M-th signal extraction unit 31MA. The first signal extraction unit 311A, the second signal extraction unit 312A, ···, and the M-th signal extraction unit 31MA extract pulse signals of a desired wave input to the first antenna 101, the second antenna 102, ···, and the M-th antenna 10M from the reception signals from the first ADC 201, the second ADC 202, ···, and the M-th ADC 20M, respectively. For example, the first signal extraction unit 311A extracts a pulse signal of the desired wave input to the first antenna 101 from a first reception signal from the first ADC 201, and the second signal extraction unit 312A extracts a pulse signal of the desired wave input to the second antenna 102 from a second reception signal from the second ADC 202.

In addition, for example, the first signal extraction unit 311A, the second signal extraction unit 312A, ···, and the M-th signal extraction unit 31MA extract pulse signals of the radio wave input to the first antenna 101, the second antenna 102, ···, and the M-th antenna 10M by removing interference waves and noise included in the reception signals from the first ADC 201, the second ADC 202, ···, and the M-th ADC 20M, respectively. The signal extraction unit 310A outputs the respective extracted pulse signals to the signal combination unit 320A.

The signal combination unit 320A is configured for generating combined signals obtained by combining a plurality of pulse signals input from the signal extraction unit 310A. The signal combination unit 320A has M signal combination units respectively corresponding to the first signal extraction unit 311A, the second signal extraction unit 312A, ···, and the M-th signal extraction unit 31MA, and including a first signal combination unit 321A, a second signal combination unit 322A, ···, and an M-th signal combination unit 32MA. Each of the first signal combination unit 321A, the second signal combination unit 322A, ···, and the M-th signal combination unit 32MA generates a combined signal obtained by combining a plurality of the pulse signals from the first signal extraction unit 311A, the second signal extraction unit 312A, ···, or the M-th signal extraction unit 31MA in the time axis direction.

For example, the first signal combination unit 321A generates a first combined signal obtained by combining N first pulse signals extracted by the first signal extraction unit 311A in the time axis direction, and the second signal combination unit 322A generates a second combined signal obtained by combining a plurality of second pulse signals extracted by the second signal extraction unit 312A in the time axis direction. In the first embodiment, N represents a preset integer equal to or greater than two. Thereby, combined signals each of which is a pulse signal obtained by making the pulse width of each of pulse signals extracted by the first signal extraction unit 311A, the second signal extraction unit 312A, ···, or the M-th signal extraction unit 31MA N times are generated by the first signal combination unit 321A, the second signal combination unit 322A, ···, or the M-th signal combination unit 32MA. The signal combination unit 320A outputs the respective generated combined signals to the compression unit 330A.

In this manner, in the radio-wave-incoming-direction estimation system 1, M information communication channels each for a corresponding one of the first antenna 101, the second antenna 102, ···, and the M-th antenna 10M are formed, and the array antenna 100, the ADC 200, the signal extraction unit 310A, and the signal combination unit 320A are configured to perform respective processes for each of the information communication channels.

The compression unit 330A compresses combined signals which are information input from the signal combination unit 320A. For example, the compression unit 330A compresses the number of the information communication channels including the array antenna 100, the ADC 200, the signal extraction unit 310A, and the signal combination unit 320A from M to K. In other words, the compression unit 330A compresses the number of the information communication channels of the combined signals input from the signal combination unit 320A from M to K. In the first embodiment, K represents an integer equal to or greater than two that is smaller than the preset value M.

Specifically, the compression unit 330A compresses the number of the information communication channels by Projection Approximation Subspace Tracking (PAST), which is a channel reduction algorithm. The compression unit 330A outputs information obtained by the compression to the second control unit 500A. For example, the compression unit 330A outputs, to the second control unit 500A, K pieces of information corresponding to M combined signals obtained by the compression using PAST and matrix value data representing the correlation between the K pieces of information.

The second control unit 500A as a signal processing device includes a restoration unit 510A and a direction estimation unit 520A. The restoration unit 510A as a signal acquisition unit acquires combined signals generated by the signal combination unit 320A by restoring information input from the compression unit 330A via a signal line L1 connecting the first control unit 300A and the second control unit 500A. For example, on the basis of information whose number of information communication channels is K input from the compression unit 330A, the restoration unit 510A restores combined signals whose number of information communication channels is M generated by the signal combination unit 320A. Specifically, the restoration unit 510A restores the number of the information communication channels by PAST. The restoration unit 510A outputs the information obtained by the restoration to the direction estimation unit 520A.

On the basis of information input from the restoration unit 510A, the direction estimation unit 520A estimates the incoming direction of a desired wave, that is, the direction of the emission source of the desired wave relative to the array antenna 100. In other words, the direction estimation unit 520A estimates the incoming direction of the desired wave on the basis of the phases of respective combined signals input from the restoration unit 510A. For example, the direction estimation unit 520A estimates the incoming direction of the desired wave by Estimation of Signal Parameters Via Rotational Invariance Techniques (ESPRIT), which is a direction estimation algorithm.

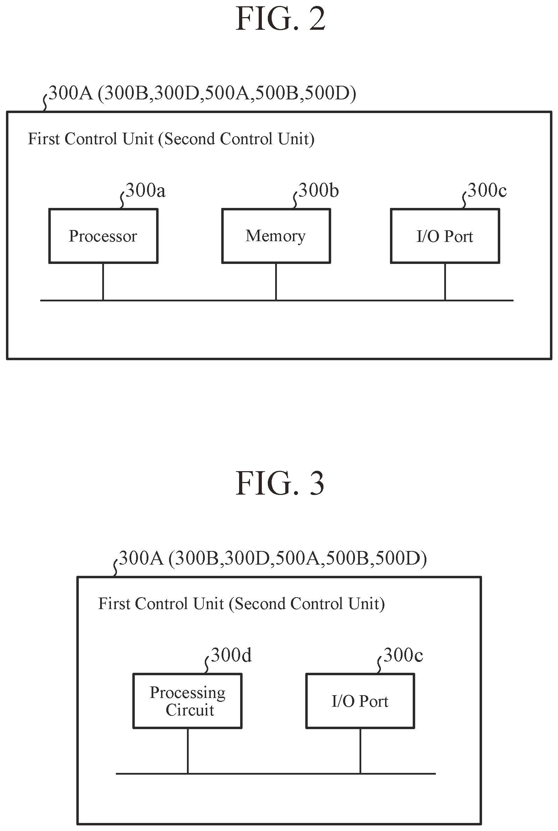

Next, the hardware configuration of the first control unit 300A is explained with reference to FIGS. 2 and 3. FIG. 2 is a drawing illustrating an example of the hardware configuration of the first control unit 300A, and FIG. 3 is a drawing illustrating an example of the hardware configuration of the first control unit 300A which is different from the example illustrated in FIG. 2. For example, as illustrated in FIG. 2, the first control unit 300A is a computer having a processor 300a, a memory 300b, and an I/O port 300c, and is configured in such a manner that the processor 300a reads out and executes programs stored on the memory 300b.

In addition, for example, as illustrated in FIG. 3, the first control unit 300A is a computer that has a processing circuit 300d which is dedicated hardware and the I/O port 300c and executes programs. For example, the processing circuit 300d includes a single circuit, a composite circuit, a programmed processor, a parallel-programmed processor, an Application Specific Integrated Circuit (ASIC), a Field Programmable Gate Array (FPGA), or a combination of these. The respective functions of the first control unit 300A are implemented by the execution of programs by the processor 300a or the processing circuit 300d which is dedicated hardware. Note that, since the hardware configuration of the second control unit 500A is similar to the first control unit 300A, explanation thereof is omitted.

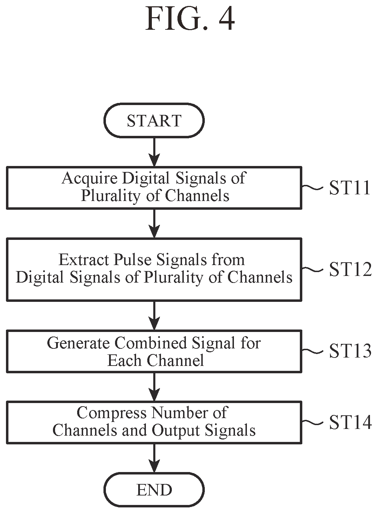

Next, a process performed by the first control unit 300A is explained with reference to FIGS. 4 to 6. FIG. 4 is a flowchart illustrating an example of a process performed by the first control unit 300A. As illustrated in FIG. 4, when the process is started, the first control unit 300A first acquires digital signals of a plurality of channels (Step ST11). In this process, for each information communication channel, the first control unit 300A causes the ADC 200 to acquire a reception signal which is a digital signal.

After the process at Step ST11 is performed, the first control unit 300A extracts pulse signals from the digital signals of the plurality of channels (Step ST12). In this process, the first control unit 300A causes the signal extraction unit 310A to extract pulse signals from a reception signal of each information communication channel acquired by the ADC 200.

After the process at Step ST12 is performed, the first control unit 300A generates a combined signal for each channel (Step ST13). In this process, the first control unit 300A causes the signal combination unit 320A to generate a combined signal based on the pulse signal of each information communication channel.

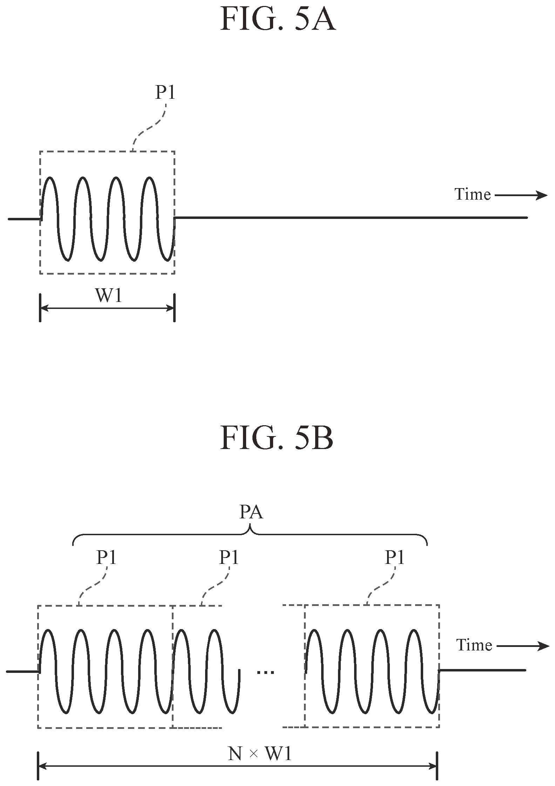

FIG. 5A is a schematic diagram illustrating a pulse signal P1 that the signal extraction unit 310A has extracted in one of information communication channels at Step ST12, and FIG. 5B is a schematic diagram illustrating a combined signal PA that the signal combination unit 320A has generated on the basis of the pulse signal P1 at Step ST13. As illustrated in FIGS. 5A and 5B, in the process at Step ST13, the signal combination unit 320A generates the combined signal PA which is a signal obtained by combining, in the time axis direction, a plurality of the pulse signals P1 (the N pulse signals P1) acquired by the signal extraction unit 310A in each information communication channel. The combined signal PA is a signal whose length in the time axis direction is N times the pulse width W1 of the pulse signals P1.

Typically, in a case where analog signals from a plurality of antenna elements having received input of a radio wave are sampled and converted into a plurality of digital signals, pulse signals of each antenna element attributable to a desired wave are extracted from the plurality of digital signals, and then the incoming direction of the desired wave is estimated by a direction estimation algorithm on the basis of the pulse signals, achieving sufficient estimation accuracy requires the length (pulse width) in the time axis direction of the extracted pulse signals to be sufficiently greater than the sampling interval at the time of the sampling of the analog signals. However, since the sampling interval cannot be arbitrarily set to a small value, the length in the time axis direction of the extracted pulse signals may not be sufficiently greater than the sampling interval depending on the performance of an analog-digital converter, the output time of the desired wave, or the reception environment of the radio wave.

In contrast to this, the radio-wave-incoming-direction estimation system 1 according to the first embodiment is configured to estimate the incoming direction of a radio wave on the basis of combined signals generated by the signal combination unit 320A of the first control unit 300A. Since the combined signals generated by the signal combination unit 320A have a length in the time axis direction which is greater than that of pulse signals extracted by the signal extraction unit 310A, the radio-wave-incoming-direction estimation system 1 according to the first embodiment can improve the estimation accuracy of the incoming direction of the radio wave compared to a case where the incoming direction of the radio wave is estimated without generating combined signals on the basis of the pulse signals extracted by the signal extraction unit 310A. In other words, by generating combined signals with a sufficient length according to the sampling interval, the radio-wave-incoming-direction estimation system 1 according to the first embodiment can achieve sufficient estimation accuracy for the incoming direction of a radio wave independently of the pulse width of extracted pulse signals.

Note that it is desirable that the value of N described above is set in such a manner that the length in the time axis direction of the combined signals PA generated by the signal combination unit 320A becomes a length with which sufficient estimation accuracy for the estimation by the direction estimation unit 520A can be achieved. For example, it is desirable that, in the estimation using a direction estimation algorithm such as ESPRIT by the direction estimation unit 520A, the length in the time axis direction of the combined signals PA is made a length with which a sufficient number of sampling points (e.g. approximately 1000 points) necessary for calculation of a correlation matrix can be achieved.

After the process at Step ST13 is performed, the first control unit 300A compresses the number of channels and outputs signals (Step ST14). In this process, the first control unit 300A compresses the number of the information communication channels of the combined signals, which are information input from the signal combination unit 320A, and outputs information obtained by the compression toward the second control unit 500A. In other words, in this process, the first control unit 300A compresses the information in such a manner that the number of the information communication channels (the number of channels) of the combined signals, which are the information input from the signal combination unit 320A, is reduced and outputs the information obtained by the compression as digital signals toward the second control unit 500A.

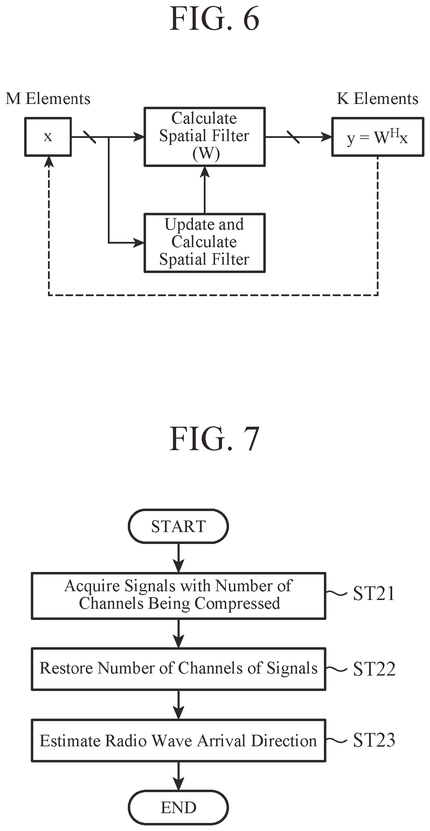

FIG. 6 is a schematic diagram illustrating a process performed by the radio-wave-incoming-direction estimation system 1 at Step ST14 when performing the information compression and restoration by serial calculation using PAST. FIG. 6 illustrates that the number of elements in the information communication channels, which has been M before the process, is compressed to K. Note that the information compression by the compression unit does not necessarily use PAST. It is sufficient if the information compression by the compression unit is lossless compression, and the compression may use another compression algorithm other than PAST.

Next, a process performed by the second control unit 500A is explained with reference to FIG. 7. FIG. 7 is a flowchart illustrating an example of the process performed by the second control unit 500A. As illustrated in FIG. 7, when the process is started, the second control unit 500A first acquires signals with the number of channels being compressed (Step ST21). In this process, the second control unit 500A acquires, from the first control unit 300A, digital signals including information about a plurality of combined signals as information compressed by the compression unit 330A of the first control unit 300A.

After the process at Step ST21 is performed, the second control unit 500A restores the number of channels of the signals (Step ST22). In this process, the second control unit 500A acquires combined signals before the compression by the compression unit 330A by causing the restoration unit 510A to restore the signals input from the first control unit 300A by a method according to the method of the information compression by the compression unit 330A. For example, in a case where the information compression by the compression unit 330A uses PAST, the restoration unit 510A performs the restoration of information by PAST as illustrated in FIG. 5.

After the process at Step ST22 is performed, the second control unit 500A estimates the incoming direction of a radio wave (Step ST23). In this process, the second control unit 500A causes the direction estimation unit 520A to estimate the incoming direction of a desired wave on the basis of the plurality of combined signals restored by the restoration unit 510A. For example, the second control unit 500A causes the direction estimation unit 520A to estimate the incoming direction of the desired wave by ESPRIT on the basis of the plurality of combined signals restored by the restoration unit 510A. Note that the direction estimation unit is not limited to estimating the incoming direction of the desired wave using ESPRIT. It is sufficient if the direction estimation unit performs the estimation of the incoming direction of a desired wave on the basis of a plurality of combined signals generated on the basis of reception signals of a plurality of antenna elements having received input of a radio wave. For example, the direction estimation unit may perform the estimation of the incoming direction of a desired wave using Multiple Signal Classification (MUSIC) or may use a trained model to estimate the incoming direction of a desired wave by receiving input of a plurality of combined signals, the trained model being obtained by training using, as teaching data, datasets each including the incoming direction of a desired wave and a plurality of combined signals that are generated on the basis of reception signals of a plurality of antenna elements having received input of the desired wave and have information about the phases of the respective reception signals.

As described above, the first control unit 300A according to the first embodiment includes: the signal extraction unit 310A to extract a first pulse signal from a reception signal of the first antenna 101 having received input of a radio wave and extract a second pulse signal from a reception signal of the second antenna 102 disposed at a distance from the first antenna 101 and having received input of the radio wave; and the signal combination unit 320A to generate a first combined signal obtained by combining a plurality of the first pulse signals in the time axis direction and a second combined signal obtained by combining a plurality of the second pulse signals in the time axis direction. Thereby, in a case where the incoming direction of the radio wave is estimated on the basis of the first combined signal and the second combined signal, the first control unit 300A can improve the estimation accuracy of the incoming direction compared to a case where the incoming direction of the radio wave is estimated without generating the first combined signal and the second combined signal.

In addition, the radio-wave-incoming-direction estimation system 1 according to the first embodiment includes: the signal line L1 for connecting the signal combination unit 320A and the direction estimation unit 520A to each other in such a manner that information can be communicated between the signal combination unit 320A and the direction estimation unit 520A; the compression unit 330A to compress the information communicated through the signal line L1, the compression unit 330A being disposed on the side of the signal combination unit 320A relative to the signal line L1; and the restoration unit 510A to restore the information compressed by the compression unit 330A, the restoration unit 510A being disposed on the side of the direction estimation unit 520A relative to the signal line L1. Thereby, the radio-wave-incoming-direction estimation system 1 enables reduction of the amount of information communicated from the signal combination unit 320A to the direction estimation unit 520A and enables simplification of the configuration of the input/output interface and signal line L1 between the first control unit 300A and the second control unit 500A.

Note that, whereas the first control unit 300A and the second control unit 500A are explained as being mutually independent information processing devices in the first embodiment, this is not the sole example. The first control unit may have some of the functions of the second control unit. The second control unit may have some of the functions of the first control unit. The first control unit and the second control unit may be formed integrally. The first control unit and the second control unit may be handled as one information processing device.

In addition, whereas the first control unit 300A is configured to output information compressed by the compression unit 330A to the second control unit 500A in the first embodiment, this is not the sole example. The first control unit 300A may be configured to output a plurality of combined signals generated by the signal combination unit from the signal combination unit to the direction estimation unit without compression. In addition, in a case where the first control unit is configured to output a plurality of combined signals generated by the signal combination unit from the signal combination unit to the direction estimation unit without compression, the number of antenna elements that the array antenna has may be two.

In addition, whereas, in the first embodiment, the signal combination unit 320A is configured to generate combined signals each of which is obtained by combining, in the time axis direction, N pulse signals extracted by the signal extraction unit in a case where N is set to a preset integer equal to or greater than two, this is not the sole example. N is not limited to a preset number, and, for example, may be a number set on the basis of the pulse width of extracted pulse signals. Specifically, N may be a number computed by the signal combination unit as such a value that the pulse width of signals after combination becomes equal to or greater than a preset threshold, and the radio-wave-incoming-direction estimation system may be configured to skip the generation of combined signals by the signal combination unit and perform the subsequent processes using pulse signals extracted by the signal extraction unit in a case where the pulse width of the pulse signals extracted by the signal extraction unit is equal to or greater than the preset threshold.

In addition, whereas, in the first embodiment, the direction estimation unit 520A is configured to estimate the incoming direction of a desired wave on the basis of information, such as phase differences, about the phases of respective combined signals input from the restoration unit 510A, for example, this is not the sole example. It is sufficient if the direction estimation unit is configured to estimate the incoming direction of a desired wave on the basis of respective combined signals input from the restoration unit, and, for example, the direction estimation unit may be configured to estimate the incoming direction of a desired wave on the basis of information, such as intensity differences (amplitude differences), about the intensities of respective combined signals input from the restoration unit.

### Second Embodiment.

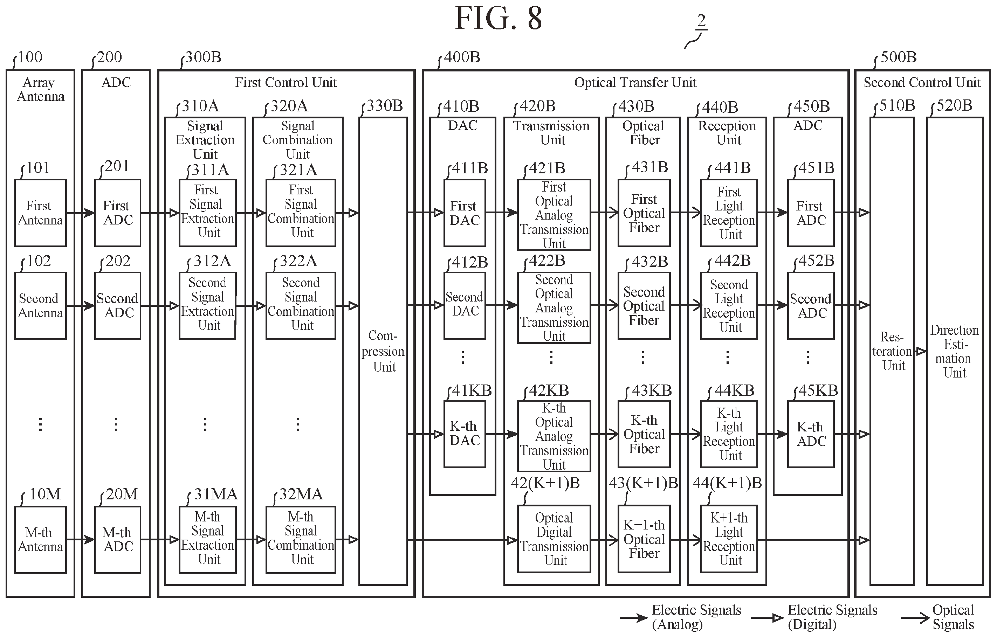

Next, a radio-wave-incoming-direction estimation system 2 according to a second embodiment is explained with reference to FIG. 8. FIG. 8 is a block diagram illustrating the schematic configuration of the radio-wave-incoming-direction estimation system 2 according to the second embodiment. The radio-wave-incoming-direction estimation system 2 according to the second embodiment is different from the radio-wave-incoming-direction estimation system 1 according to the first embodiment in that a first control unit and a second control unit are connected to each other by an optical transfer unit, but the other constituent elements are similar. The constituent elements similar to those in the first embodiment are given names and reference signs similar to those in the first embodiment, and explanation thereof is omitted.

As illustrated in FIG. 8, the radio-wave-incoming-direction estimation system 2 according to the second embodiment includes an array antenna 100, an ADC 200, a first control unit 300B, an optical transfer unit 400B, and a second control unit 500B which are connected to each other by signal lines in such a manner that information can be communicated between them. The first control unit 300B as a signal processing device includes a signal extraction unit 310A, a signal combination unit 320A, and a compression unit 330B.

The compression unit 330B generates a plurality of compressed signals which are signals obtained by compressing a plurality of combined signals which are information input from the signal combination unit 320A. For example, the compression unit 330B generates K compressed signals that are obtained by the compression of the number of information communication channels and correspond to M combined signals, and matrix value data representing the correlation between the M combined signals. In other words, the compression unit 330B generates K+1 signals including a first compressed signal, a second compressed signal, ···, and a K-th compressed signal obtained by the compression of the number of information communication channels, and the matrix value data representing the correlation between the M combined signals. The compression unit 330B outputs the generated K+1 signals to the optical transfer unit 400B.

The optical transfer unit 400B interconnects the first control unit 300B and the second control unit 500B and allows the communication of information from the first control unit 300B to the second control unit 500B by Radio over Fiber (RoF). The optical transfer unit 400B includes a digital-analog converter (Digital-to-Analog Converter; hereinafter, referred to as DAC) 410B, a transmission unit 420B, an optical fiber 430B, a reception unit 440B, and an ADC 450B.

The DAC 410B has a first DAC 411B, a second DAC 412B, ···, and a K-th DAC 41KB. For transmission to the optical fiber 430B, the first DAC 411B, the second DAC 412B, ···, and the K-th DAC 41KB convert the first compressed signal, the second compressed signal, ···, and the K-th compressed signal, respectively, which are digital signals generated by the compression unit 330B, into analog signals.

The transmission unit 420B has a first optical analog transmission unit 421B, a second optical analog transmission unit 422B, ···, and a K-th optical analog transmission unit 42KB and an optical digital transmission unit 42(K+1)B. The first optical analog transmission unit 421B, the second optical analog transmission unit 422B, ···, and the K-th optical analog transmission unit 42KB convert analog signals from the DAC 410B into optical signals, and the optical digital transmission unit 42(K+1)B converts matrix value data which is a digital signal from the compression unit 330B into an optical signal. The first optical analog transmission unit 421B, the second optical analog transmission unit 422B, ···, and the K-th optical analog transmission unit 42KB and the optical digital transmission unit 42(K+1)B output the optical signals to the optical fiber 430B. For example, each of the first optical analog transmission unit 421B, the second optical analog transmission unit 422B, ···, and the K-th optical analog transmission unit 42KB and the optical digital transmission unit 42(K+1)B has a light source and an optical modulator to modulate light from the light source, converts, into an optical signal, an electric signal by an external modulation scheme in which the light from the light source is modulated according to information to be output, and outputs the optical signal. Note that the transmission units may be configured to convert electric signals into optical signals by a direct modulation scheme and output the optical signals.

The optical fiber 430B has a first optical fiber 431B, a second optical fiber 432B, ···, and a K+1-th optical fiber 43(K+1)B. The first optical fiber 431B, the second optical fiber 432B, ···, and the K+1-th optical fiber 43(K+1)B in the optical fiber 430B communicate, to the reception unit 440B, information input from the first optical analog transmission unit 421B, the second optical analog transmission unit 422B, ···, and the K-th optical analog transmission unit 42KB and the optical digital transmission unit 42(K+1)B, respectively.

The reception unit 440B has a first light reception unit 441B, a second light reception unit 442B, ···, and a K+1-th light reception unit 44(K+1)B. The first light reception unit 441B, the second light reception unit 442B, the ···, and the K+1-th light reception unit 44(K+1)B convert, into electric signals, optical signals communicated by the first optical analog transmission unit 421B, the second optical analog transmission unit 422B, ···, and the K-th optical analog transmission unit 42KB and the optical digital transmission unit 42(K+1)B and output the electric signals. For example, using a photodiode, each of the first light reception unit 441B, the second light reception unit 442B, ···, and the K+1-th light reception unit 44(K+1)B converts, into an electric signal, an optical signal communicated through the optical fiber 430B.

The ADC 450B has a firstADC 451B, a second ADC 452B, ···, and a K-th ADC 45KB. The first ADC 451B, the second ADC 452B, ···, and the K-th ADC 45KB convert, into digital signals, information which is analog signals input from the first light reception unit 441B, the second light reception unit 442B, ···, and the K-th light reception unit 44KB and output the digital signals.

The second control unit 500B as a signal processing device includes a restoration unit 510B and a direction estimation unit 520B. The restoration unit 510B as an information acquisition unit is connected to the ADC 450B and the K+1-th light reception unit 44(K+1)B and restores information compressed by the compression unit 330B on the basis of digital signals input from the ADC 450B and information input from the K+1-th light reception unit 44(K+1)B. The digital signals input from the ADC 450B include information about M combined signals output from the signal combination unit 320A, and the information input from the K+1-th light reception unit 44(K+1)B is matrix value data that is generated by the compression unit 330B and represents the correlation between the M combined signals. On the basis of these pieces of information, the restoration unit 510B acquires the M combined signals output from the signal combination unit 320A.

By being configured in this manner, the signal combination unit 320A and the direction estimation unit 520B according to the second embodiment are connected to each other in such a manner that information can be communicated between them via the compression unit 330B, the optical transfer unit 400B, and the restoration unit 510B. In other words, the signal combination unit 320A and the direction estimation unit 520B according to the second embodiment are indirectly connected to each other in such a manner that information can be communicated between them by the optical transfer unit 400B. Note that since the hardware configuration of the first control unit 300B and the second control unit 500B is similar to that of the first control unit 300A according to the first embodiment, explanation thereof is omitted. In addition, the first control unit or the second control unit may include some of the constituent elements of the optical transfer unit.

As described above, the radio-wave-incoming-direction estimation system 2 according to the second embodiment includes: the optical transfer unit 400B as an optical transfer path for connecting the signal combination unit 320A and the direction estimation unit 520B to each other in such a manner that information can be communicated between them; the compression unit 330B to compress information communicated by the optical transfer unit 400B, the compression unit 330B being disposed on the side of the signal combination unit 320A relative to the optical transfer unit 400B; and the restoration unit 510B to restore information compressed by the compression unit 330B, the restoration unit 510B being disposed on the side of the direction estimation unit 520B relative to the optical transfer unit 400B. By being configured in this manner, the radio-wave-incoming-direction estimation system 2 according to the second embodiment enables simplification of the configuration of the input/output interface between the first control unit 300B and the optical transfer unit 400B, the input/output interface between the optical transfer unit 400B and the second control unit 500B, and the optical transfer unit 400B.

In addition, for example, by causing the compression unit 330B to compress the number of information communication channels communicated from the signal combination unit 320A to the direction estimation unit 520B and simplifying the configuration of the optical transfer unit 400B, it becomes possible to keep the number of elements of each constituent element in the optical transfer unit 400B small and to keep the scale, occupied area, and occupied volume of transfer paths small.

### Third Embodiment.

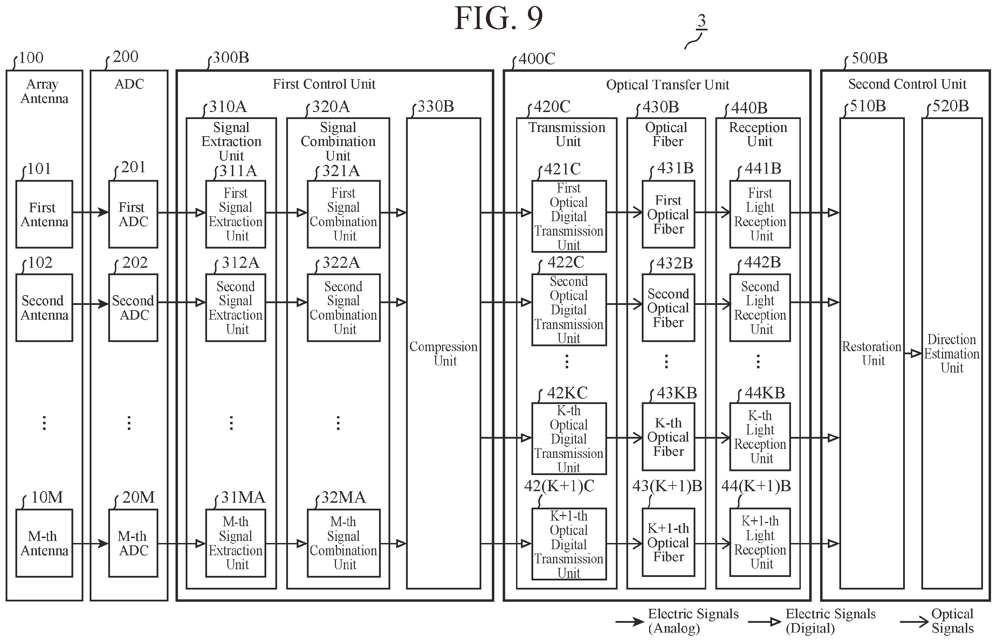

Next, a radio-wave-incoming-direction estimation system 3 according to a third embodiment is explained with reference to FIG. 9. FIG. 9 is a block diagram illustrating the schematic configuration of the radio-wave-incoming-direction estimation system 3 according to the third embodiment. The radio-wave-incoming-direction estimation system 3 according to the third embodiment has an optical transfer unit which has configuration different from that in the radio-wave-incoming-direction estimation system 2 according to the second embodiment, but the other constituent elements are similar. The constituent elements similar to those of the second embodiment are given names and reference signs similar to those in the second embodiment, and explanation thereof is omitted.

As illustrated in FIG. 9, the radio-wave-incoming-direction estimation system 3 according to the third embodiment includes an array antenna 100, an ADC 200, a first control unit 300B, an optical transfer unit 400C, and a second control unit 500B which are connected to each other by signal lines in such a manner that information can be communicated between them. The optical transfer unit 400C as an optical transfer path includes a transmission unit 420C, an optical fiber 430B, and a reception unit 440B.

The transmission unit 420C has a first optical digital transmission unit 421C, a second optical digital transmission unit 422C, ···, and an optical digital transmission unit 42(K+1)C. The transmission unit 420C has the first optical digital transmission unit 421C, the second optical digital transmission unit 422C, ···, and the optical digital transmission unit 42(K+1)C. Each of the first optical digital transmission unit 421C, the second optical digital transmission unit 422C, ···, and the optical digital transmission unit 42(K+1)C converts, into an optical signal, information input from a compression unit 330B and outputs the optical signal to the optical fiber 430B.

In this manner, in the radio-wave-incoming-direction estimation system 3 according to the third embodiment, the optical transfer unit 400C communicates information from the compression unit 330B to the second control unit 500B without converting the information into analog signals. Thereby, by omitting DACs and ADCs in the optical transfer unit, it becomes possible to keep the occupied area and occupied volume of the optical transfer unit 400C small. Note that, in the radio-wave-incoming-direction estimation system according to the third embodiment, the first control unit or the second control unit may include some of the constituent elements of the optical transfer unit.

### Fourth Embodiment.

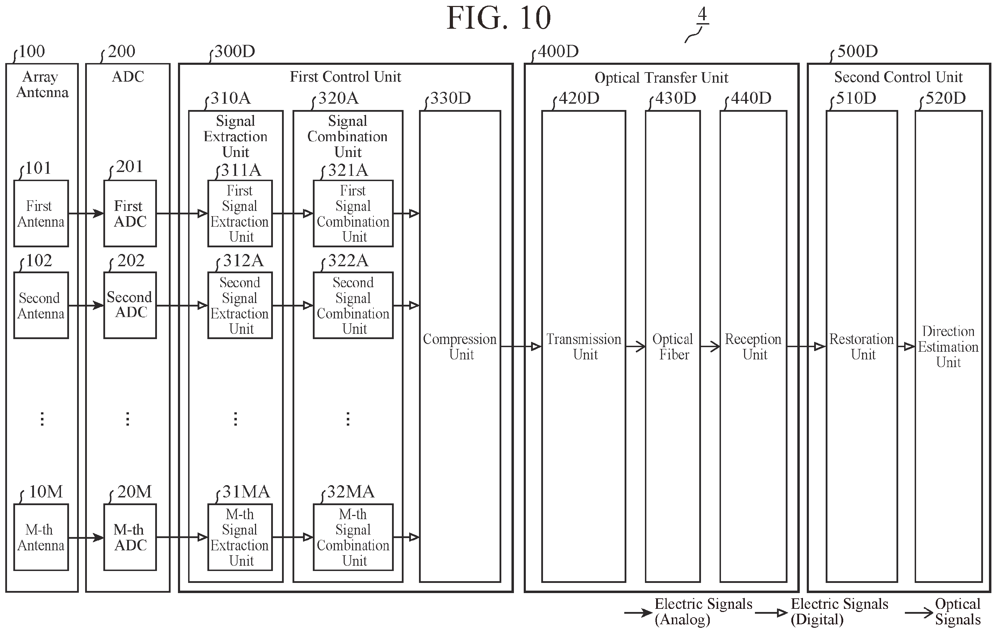

Next, a radio-wave-incoming-direction estimation system 4 according to a fourth embodiment is explained with reference to FIG. 10. FIG. 10 is a block diagram illustrating the schematic configuration of the radio-wave-incoming-direction estimation system 4 according to the fourth embodiment. The configuration related to the communication of information from a compression unit to a restoration unit in the radio-wave-incoming-direction estimation system 4 according to the fourth embodiment is different from that in the radio-wave-incoming-direction estimation system 3 according to the third embodiment, but the other constituent elements are similar. The constituent elements similar to those of the third embodiment are given names and reference signs similar to those in the third embodiment, and explanation thereof is omitted.

As illustrated in FIG. 10, the radio-wave-incoming-direction estimation system 4 according to the fourth embodiment includes an array antenna 100, an ADC 200, a first control unit 300D, an optical transfer unit 400D, and a second control unit 500D which are connected to each other by signal lines in such a manner that information can be communicated between them. The first control unit 300D includes a signal extraction unit 310A, a signal combination unit 320A, and a compression unit 330D.

The compression unit 330D compresses combined signals which are information input from the signal combination unit 320A. For example, the compression unit 330D compresses information input from the signal combination unit 320A by converting M combined signals generated by the signal combination unit 320A into matrix value data representing the correlation between the combined signals using PAST. The compression unit 330D outputs the information obtained by the compression to the optical transfer unit 400D.

An optical transfer unit 400C as an optical transfer path includes a transmission unit 420C, an optical fiber 430B, and a reception unit 440B. The transmission unit 420C converts information input from the compression unit 330D into an optical signal, and outputs the optical signal to an optical fiber 430D. The optical fiber 430D communicates the information which is the optical signal input from a transmission unit 420D to a reception unit 440D. The reception unit 440D converts the optical signal communicated through the optical fiber 430D into information about an electric signal and outputs the information.

The second control unit 500D includes a restoration unit 510D and a direction estimation unit 520D. The restoration unit 510D as an information acquisition unit restores information compressed by the compression unit 330D on the basis of information input from the reception unit 440D. For example, in a case where the information input from the reception unit 440D is matrix value data representing the correlation between M combined signals generated by the signal combination unit 320A, the restoration unit 510D acquires the M combined signals generated by the signal combination unit 320A on the basis of the matrix value data. The direction estimation unit 520D estimates the incoming direction of a desired wave on the basis of the information restored by the restoration unit 510D. Note that functions of the direction estimation unit 520D are similar to those of the direction estimation unit 520B according to the second embodiment. Accordingly, explanation thereof is omitted. In addition, since the hardware configuration of the first control unit 300D and the second control unit 500D is similar to that of the first control unit 300A according to the first embodiment, explanation thereof is omitted.

In this manner, the radio-wave-incoming-direction estimation system 4 according to the fourth embodiment causes the compression unit 330D to convert M combined signals generated by the signal combination unit 320A into matrix value data representing the correlation between the combined signals. Thereby, it becomes possible to keep the number of elements of each constituent element in the optical transfer unit 400D small and to keep the scale, occupied area, and occupied volume of transfer paths small.

Note that the present disclosure allows any combinations of each of the embodiments, modifications of any constituent elements in each of the embodiments, and omissions of any constituent elements in each of the embodiments.

### INDUSTRIAL APPLICABILITY

For example, the signal processing devices according to the present disclosure can be used for a system to estimate the incoming direction of a radio wave on the basis of signals from an array antenna having received input of the radio wave.

### REFERENCE SIGNS LIST

1: Radio-wave-incoming-direction estimation system; 2: Radio-wave-incoming-direction estimation system; 3: Radio-wave-incoming-direction estimation system; 4: Radio-wave-incoming-direction estimation system; 10M: M-th antenna; 31MA: M-th signal extraction unit; 32MA: M-th signal combination unit; 42(K+1)B: Optical digital transmission unit; 42KB: K-th optical analog transmission unit; 43(K+1)B: K+1-th optical fiber; 44(K+1)B: K+1-th light reception unit; 44KB: K-th light reception unit; 100: Array antenna; 101: First antenna; 102: Second antenna; 300A: First control unit (signal processing device); 300B: First control unit (signal processing device); 300D: First control unit (signal processing device); 310A: Signal extraction unit; 311A: First signal extraction unit; 312A: Second signal extraction unit; 320A: Signal combination unit; 321A: First signal combination unit; 322A: Second signal combination unit; 330A: Compression unit; 330B: Compression unit; 330D: Compression unit; 400B: Optical transfer unit; 400C: Optical transfer unit; 400D: Optical transfer unit; 420B: Transmission unit; 420C: Transmission unit; 420D: Transmission unit; 421B: First optical analog transmission unit; 421C: First optical digital transmission unit; 422B: Second optical analog transmission unit; 422C: Second optical digital transmission unit; 430B: Optical fiber; 430D: Optical fiber; 431B: First optical fiber; 432B: Second optical fiber; 440B: Reception unit; 440D: Reception unit; 441B: First light reception unit; 442B: Second light reception unit; 500A: Second control unit (signal processing device); 500B: Second control unit (signal processing device); 500D: Second control unit (signal processing device); 510A: Restoration unit (information acquisition unit); 510B: Restoration unit (information acquisition unit); 510D: Restoration unit (information acquisition unit); 520A: Direction estimation unit; 520B: Direction estimation unit; 520D: Direction estimation unit; 201: First ADC; 202: Second ADC; 451B: First ADC; 452B: Second ADC; 411B: First DAC; 412B: Second DAC; L1: Signal line; P1: Pulse signal; PA: Combined signal; W1: Pulse width

## Claims

1. A signal processing device comprising:
a signal extraction unit to extract a first pulse signal from a reception signal of a first antenna having received input of a radio wave and extract a second pulse signal from a reception signal of a second antenna that is disposed at a distance from the first antenna and has received input of the radio wave; and
a signal combination unit to generate a first combined signal obtained by combining a plurality of first pulse signals in a time axis direction and a second combined signal obtained by combining a plurality of second pulse signals in the time axis direction.

2. The signal processing device according to claim 1, further comprising a direction estimation unit to estimate an incoming direction of the radio wave on a basis of the first combined signal and the second combined signal.

3. The signal processing device according to claim 2, further comprising:
a signal line for connecting the signal combination unit and the direction estimation unit to each other in such a manner that information can be communicated between the signal combination unit and the direction estimation unit;
a compression unit to compress information communicated through the signal line, the compression unit being disposed on a side of the signal combination unit relative to the signal line; and
a restoration unit to restore the information compressed by the compression unit, the restoration unit being disposed on a side of the direction estimation unit relative to the signal line.

4. The signal processing device according to claim 3, wherein the signal line is an optical transfer path to convey information as an optical signal.

5. The signal processing device according to claim 3 or 4, wherein
the signal extraction unit and the signal combination unit perform a process of combining pulse signals each for a corresponding one of information communication channels each formed for a corresponding one of a plurality of antennas including the first antenna and the second antenna, and
the compression unit compresses the information conveyed through the signal line by compressing a number of the information communication channels.

6. A signal processing method performed by a device including a signal extraction unit and a signal combination unit, comprising:
extracting, by the signal extraction unit, a first pulse signal from a reception signal of a first antenna having received input of a radio wave and extracting a second pulse signal from a reception signal of a second antenna that is disposed at a distance from the first antenna and has received input of the radio wave; and
generating, by the signal combination unit, a first combined signal obtained by combining a plurality of first pulse signals in a time axis direction and a second combined signal obtained by combining a plurality of second pulse signals in the time axis direction.
